# EUROPÄISCHE PATENTSCHRIFT

(11) **EP 0 434 978 B1**
(45) Veröffentlichungstag und Bekanntmachung des Hinweises auf die Patenterteilung: **27.01.1993**
(21) Anmeldenummer: 90122293.5
(22) Anmeldetag: 22.11.1990
(51) Int. Cl.: F16B 21/16, H01R 13/20, F16B 21/10, H01R 13/17

(54) **Steckverbindung**
Plugable connection
Connexion enfichable

(30) Priorität: 27.12.1989 CH 4661/89
(43) Veröffentlichungstag der Anmeldung: 03.07.1991
(73) Patentinhaber: MULTI-CONTACT AG, CH-4123 Allschwil (CH)
(72) Erfinder: Bubendorf, Bernhard, F-68220 Attenschwiller (FR)
(74) Vertreter: Lauer, Joachim, Dr.

(56) Entgegenhaltungen:
- DE-A- 2 754 747
- FR-A- 2 232 731
- FR-A- 2 527 015
- GB-A- 2 085 992
- US-A- 3 569 903

## Beschreibung

### Technisches Gebiet

Die vorliegende Erfindung betrifft eine Steckverbindung mit einer Steckbuchse, einem Arretierungselement und einem Steckerstift, wobei das Arretierungselement mit einem Ende koaxial in die Steckbuchse einführbar und der Steckerstift durch das Arretierungselement koaxial durchsteckbar ist, wobei sich die Steckbuchse von ihrer Einstecköffnung aus gesehen in ihrem Innern von einem Innendurchmesser I1 konisch auf einen Innendurchmesser I2 erweitert, wobei sich der Steckerstift von seiner Spitze aus gesehen von einem Aussendurchmesser A1 konisch auf einen Aussendurchmesser A2 erweitert und sich anschliessend konisch wieder auf einen geringeren Aussendurchmesser A3 verjüngt und diesen Aussendurchmesser A3 mindestens über einen Längsabschnitt mit der Länge L1 aufweist, wobei sich das Arretierungselement von seinem genannten Ende aus gesehen von einem Aussendurchmesser A4 auf einen Aussendurchmesser A5 konisch verjüngt und sich von einem Innendurchmesser I3 konisch auf einen Innendurchmesser I4 verjüngt, diesen Innendurchmesser über einen Längsabschnitt mit einer Länge L2 aufweist und sich anschliessend wieder auf einen Innendurchmesser I5 erweitert, wobei das Arretierungselement aus einem elastischen Material besteht und von seinem genannten Ende ausgehende Längsschlitze aufweist, welche sich bis in den Bereich mit dem Aussendurchmesser A5 erstrecken, und wobei I1 kleiner als A4, A4 kleiner als I2, A3 kleiner als I4, I4 kleiner als A2 und L2 kleiner als L1 ist.

### Stand der Technik

Eine solche Steckverbindung ist beispielsweise bekannt aus der DE-A1 27 54 747. Die bekannte Steckverbindung dient zur Verbindung zweier elektrischer Leitungen miteinander. Das Arretierungselement verhindert ein selbsttätiges Lösen der Steckverbindung bei einer Zugbelastung des Steckerstiftes bzw. der mit diesem verbundenen elektrischen Leitung. Bei der bekannten Steckverbindung wird der Steckerstift gemeinsam mit dem Arretierungselement in die Steckbuchse eingesteckt und kann auch nur zusammen mit diesem wieder aus der Steckerbuchse herausgezogen werden. Das Herausziehen erfolgt durch eine Zugbelastung des Arretierungselements.

Das Arretierungselement ist hier quasi ein Teil des Steckers. Damit der zum Herausziehen aus der Steckbuchse erforderliche Zug auf das Arretierungselement ausgeübt werden kann, weist dieses einen Griffteil mit einer erheblichen Länge auf, welcher sogar noch zusätzlich mit einem Loch zum Einhängen eines Zughakens versehen ist.

### Darstellung der Erfindung

Es ist Aufgabe der vorliegenden Erfindung, eine Steckverbindung der eingangs genannten Art anzugeben, bei welcher bei einfachster Konstruktion das Arretierungselement im wesentlichen ein Teil der Steckbuchse ist, beim Lösen der Steckverbindung in dieser verbleibt, welche einfach mit nur einer Hand zu bedienen ist und bei welcher ein ungewolltes Lösen bei Zugbelastung jeglicher Art, selbst auf das Arretierungselement, sicher verhindert ist. Diese Aufgabe wird erfindungsgemäss gelöst durch eine Steckverbindung mit den Merkmalen des Patentanspruchs 1.

Die erfindungsgemässe Steckverbindung ist demnach dadurch gekennzeichnet, dass (I1 - A3) kleiner als (A4 - I4) und (A4 - I4) kleiner als (I2 - A2) ist.

Bei der erfindungsgemässen Steckvorrichtung muss das Arretierungselement vor dem Steckerstift in die Steckbuchse hineingesteckt werden. Umgekehrt kann der Steckerstift nicht gemeinsam mit dem Arretierungselement aus der Steckbuchse wieder herausgezogen werden. Die Summe aus der Dicke des Steckerstiftes selbst an seiner dünnsten Stelle in seinem Arretierungsbereich (von einer ggf. noch dünneren, ggf. verlängerten Spitze abgesehen) und der Dicke des verdickten Bereichs am Ende des Arretierungselements sind nämlich grösser bemessen als die lichte Weite der Steckbuchse im Bereich ihrer Einstecköffnung. Zum Einführen des Arretierungselements in die Steckbuchse muss dessen vorderes, etwas verdicktes sowie geschlitzes Ende zusammengedrückt werden. Es weitet sich im erweiterten Bereich der Steckbuchse elastisch wieder auf. Die Arretierung des Steckers in der Steckbuchse beruht auf dem gleichen Prinzip wie bei der bekannten Steckverbindung. Das Lösen der Steckverbindung erfolgt dagegen durch tiefer Hineindrücken des Arretierungselements in die Steckbuchse. Dabei wird das genannte vordere verdickte Ende des Arretierungselements innerhalb des erweiterten Bereichs innerhalb der Steckbuchse durch den verdickten Bereich am Steckerstift aufgeweitet. Die lichte Weite des aufgeweiteten Bereichs im Innern der Steckbuchse ist so bemessen, dass das verdickte Ende des Arrtierungselements über den verdickten Bereich des Steckerstiftes unter elastischer Aufweitung gleiten kann und diesen dadurch freigibt.

Vorteilhafte und insofern bevorzugte Ausgestaltungen und Weiterbildungen der erfindungsgemässen Steckverbindung sind in den abhängigen Ansprüchen gekennzeichnet.

### Wege zur Ausführung der Erfindung

Nachstehend wird die Erfindung anhand von Ausführungsbeispielen näher erläutert, wobei auf die beigefügten Zeichnungen Bezug genommen wird. In diesen zeigt:
Fig. 1 in geschnittener Darstellung eine Steckverbindung mit einer Steckbuchse einem Arretierungselement und einer Steckerspitze,
Fig. 2 eine Fig. 1 entsprechende Darstellung, jedoch mit darin eingetragenen Durchmesserbezeichnungen,
Fig. 3 in perspektivischer Darstellung das Arretierungselement,
Fig. 4 nur ausschnittsweise das vordere Ende des Arretierungselements sowie des benachbarten Teils des Steckerstiftes in einer gegenüber Fig. 1 und 2 etwas andersartigen Ausbildung, und
Fig. 5 wiederum in geschnittener Darstellung unter a) bis bis d) eine zur elektrischen Kontaktierung ausgebildete Steckverbindung in verschiedenen Phasen.

### Wege zur Ausführung der Erfindung

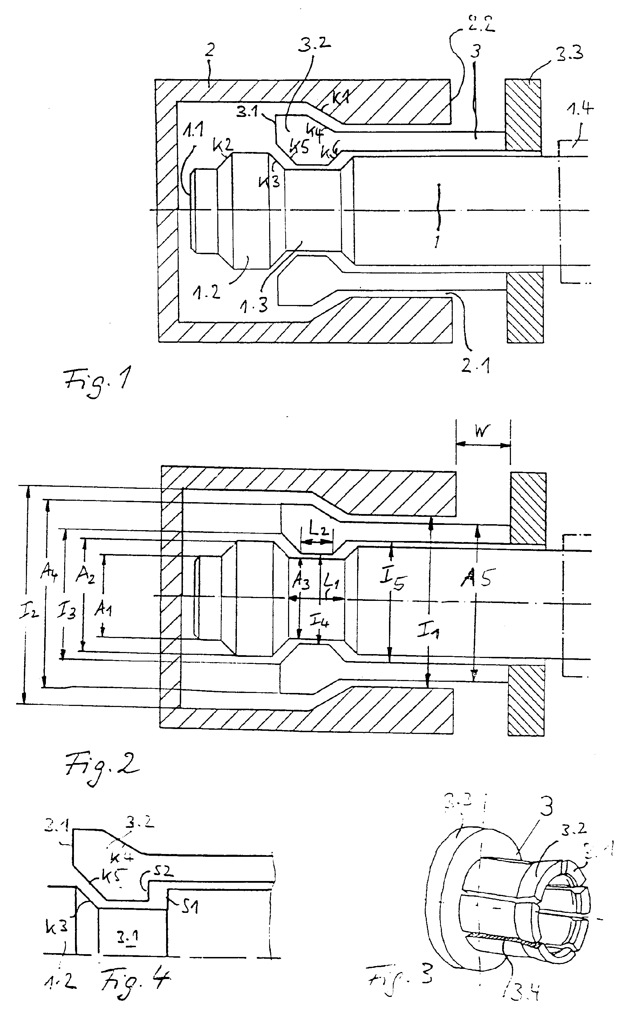

Die in Fig. 1 dargestellte Steckverbindung weist einen Steckerstift 1, eine Steckbuchse 2 und ein Arretierungselement 3 auf. Die genannten Elemente sind rotationssymmetrisch und im zusammengesteckten Zustand koaxial zueinander angeordnet.

Die Steckbuchse 2 weist an ihrer Einstecköffnung 2.1 einen Innendurchmesser I1 auf und erweitert sich in ihrem Innern konisch (Konusfläche K1) auf einen Innendurchmesser I2. Mit 2.2 ist die Stirnseite der Einstecköffnung 2.1 bezeichnet.

Der Steckerstift 1 weist von seiner Spitze 1.1 aus gesehen von einem Aussendurchmesser A1 aus eine Verdickung 1.2 mit einen Aussendurchmesser A2 auf und nachfolgend wieder eine Einschnürung auf einen Aussendurchmesser A3 auf. Es ist dies der kleinste Aussendurchmesser des Steckerstiftes 1. Den Aussendurchmesser A3 behält der Steckerstift über einen Längsabschnitt 1.3 der Länge L1 und erweitert sich danach wieder in etwa auf den Aussendurchmesser A2. Letzeres ist allerdings für die Funktion der Steckverbindung nicht unbedingt erforderlich. Die Übergänge zwischen den einzelnen Aussendurchmessern sind wiederum konisch ausgebildet (Konusflächen K2 und K3).

Das Arretierungselement 3 verjüngt sich konisch (Konusfläche K4) von seinem in die Steckbuchse 2 eingesteckten Ende 3.1 aus gesehen von einem Aussendurchmesser A4 auf einen Aussendurchmesser A5. Es verjüngt sich weiter von diesem Ende aus gesehen von einem Innendurchmesser I3 konisch (Konusfläche K5) auf einen Innendurchmesser I4 wobei es diesen Innendurchmesser über einen Längsabschnitt mit einer Länge L2 aufweist und sich anschliessend wieder auf einen Innendurchmesser I5 erweitert.

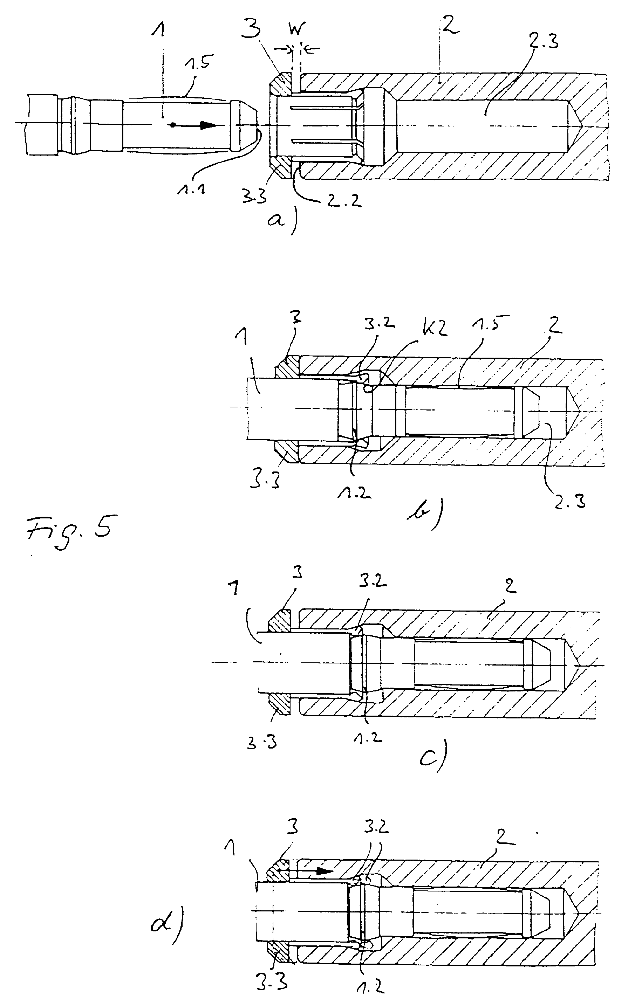

Das Arretierungselement besteht aus einem elastischen Material und ist mit mehreren von seinem genannten Ende ausgehenden, über seinen Umfang verteilten Längsschlitzen 3. 4 versehen, welche sich bis in den Bereich mit dem Aussendurchmesser A5 erstrecken. Das vordere Ende des Arretierungselements besteht somit aus einer Mehrzahl von federnden Zungen, wie dies insbesondere in Fig. 3 zu erkennen ist.

Wie anhand der Figuren 1 und 2 zu erkennen ist, ist der Innendurchmesser I1 der Einsteckhülse 2 an ihrer Einstecköffnung 2.1 kleiner als der Aussendurchmesser A4 am vorderen, verdickten Ende 3.2 des Arretierungselements 3. Andererseits ist dieser kleiner als der Innendurchmesser I2 der Einsteckbuchse in ihrem Innern. Das Arretierungselement 2 kann insofern in die Einsteckbuchse nur eingeführt werden, wenn sein vorderes, verdicktes Ende 3.2 etwas zusammengedrückt, d.h. hinsichtlich seines Durchmessers etwas reduziert wird. Dies ist möglich auf Grund der genannten Längsschlitze 3.4. Ist das Arretierungselement 3 weit genug in die Einsteck- buchse 2 eingeschoben, weitet sich sein vorderes Ende auf Grund der federnden Eigenschaften des verwendeten Materials elastisch wieder auf. Wegen der konischen Ausbildung der Flächen K4 und K1 kann das Arretierungselement 3 wieder aus der Steckbuchse 2 herausgezogen werden.

Weiter ist der durch die Differenz zwischen dem Innendurchmesser I1 der Einsteckbuchse 2 an ihrer Einstecköffnung 2.1 und dem kleinsten Aussendurchmesser A3 des Steckerstiftes 1 im Bereich 1.3 bestimmte maximale Spalt zwischen dem Steckerstift 1 und der Innenwand der Einsteckbuchse 2 in ihrem Eingangsbereich kleiner bemessen als die durch die Differenz zwischen dem Aussendurchmesser A4 und dem Innendurchmesser I4 bestimmte Dicke des Arretierungselements 3 im Bereich seines vorderen verdickten Endes 3.2. Der Steckerstift 1 kann daher nicht zusammen mit dem Arretierungselement 3 in die Steckbuchse 2 eingeführt werden. Es muss vielmehr, wie vorstehend beschreiben, zunächst das Arretierungselement 3 in die Steckbuchse 2 eingeführt werden. Erst dann kann der Steckerstift 1 in das Arretierungselement 3 koaxial eingesteckt werden.

Der Aussendurchmesser A3 des Steckerstiftes in seinem Bereich 1.3 ist kleiner als der Innendurchmesser I4 des Arretierungselements 3 im Bereich seines vorderen verdickten Endes 3.2. Weiter ist die Länge L2 des Längsabschnitts, in dem das Arretierungselement 3 seinen kleinsten Innendurchmesser I4 aufweist kleiner als die Länge L1 des Längsabschnitts, in dem der Steckerstift 1 seinen kleinsten Aussendurchmesser A3 aufweist. Weiter ist jedoch der Aussendurchmesser A3 des Steckerstiftes 1 in seinem verdickten Bereich 1.2 grösser als der Innendurchmesser I4 am Arretierungselement 3. Die hat einerseits zur Folge, dass in der in den Figuren 1 und 2 dargestellten relativen Stellung von Arretierungselement und Steckerstift das vordere verdickte Ende des Arretierungselements in die verengten Bereich mit dem Aussendurchmesser A3 des Steckerstiftes spannungsfrei eingreift und dass andererseits beim Versuch, den Steckerstift 1 aus seiner in den Figuren 1 und 2 dargestellten Stellung nach rechts aus dem Arretierungselement 3 und der Steckbuchse 2 herauszuziehen, die beiden Konusflächen K3 und K5 aneinander in Anschlag kommen, wodurch das Arretierungselement 3 vom Steckerstift 1 nach rechts mitgenommen wird, bis auch die beiden Konusflächen K1 und K4 gegenseitig in Anschlag kommen. In der Folge tritt eine Klemmwirkung ein, die verhindert, dass der Steckerstift 1 weiter nach recht herausgezogen werden kann. Durch die konische Ausbildung der genannten Anschlagflächen ist die Klemmwirkung um so stärker, je stärker die Zugkraft auf dem Steckerstift 1 ist.

Da Lösen der Steckverbindung erfolgt einfach dadurch, dass das der Stecker 1 bezüglich seiner Einstecktiefe in der Steckbuchse 2 festgehalten, das Arretierungselement 3 dagegen tiefer in diese hineingestossen wird. Dabei gleitet das vordere verdickte Ende 3.2 des Arretierungselements unter elastischer Aufweitung über den verdickten Bereich 1.2 des Steckerstiftes, wodurch diese freigegeben wird und aus dem Arretierungselement und der Steckbuchse 2 herausgezogen werden kann. Damit dies möglich ist, ist der durch die Differenz zwischen dem Innendurchmesser I2 der Einsteckbuchse 2 in ihrem erweiterten innernen Bereich und dem Aussendurchmesser A2 des Steckerstiftes 1 in seinem verdickten Bereich 1.2 bestimmte Spalt grösser bemessen als die durch die Differenz zwischen dem Aussendurchmesser A4 und dem Innendurchmesser I4 bestimmte Dicke des Arretierungselements 3 im Bereich seines vorderen verdickten Endes 3.2.

Vorzugsweise sind der Konuswinkel zwischen den Innendurchmessern I1 und I2 der Steckbuchse (Konusfläche K1) und der Konuswinkel zwischen den Aussendurchmessern A4 und A5 (Konusfläche K4) des Arretierungselements einander entsprechend bemessen, damit die entsprechenden Konusflächen zur ganzflächigen Anlage aneinander kommen. Gleiches gilt vorzugsweise auch für die Konuswinkel zwischen den Innendurchmessern I3 und I4 des Arretierungselements 3 einerseits und zwischen den Aussendurchmessern A2 und A3 des Steckerstiftes 1 andererseits.

Zur Erleichterung des Einsteckens des Steckerstiftes 1 ist vorzugsweise auch der Übergang zwischen den Innendurchmessern I4 und I5 am Arretierungselement 3 konisch (Konusfläche K6) mit einem der Konusfläche K1 entsprechenden Konuswinkel ausgebildet.

In gewählten Ausführungsbeispiel ist das Arretierungselement 3 wie erläutert an seinem Ende im Bereich 3.2 verdickt. Dort überschneidet sich ein Längsbereich, in dem das Arretierungselement 3 den Aussendurchmesser A4 aufweist, d.h. in dem es nach aussen verdickt ist, mit einem Längsbereich, in dem das Arretierungselement den Innendurchmesser I4 aufweist, d.h. nach innen verdickt ist. Die Verdickung nach aussen und die Verdickung nach innen könnten aber genausogut auch in sich nicht überschneidenden Längsbereichen angeordnet sein.

An seinem anderen Ende ist das Arretierungselement 3 mit einem als Einsschubbegrenzung dienenden Kragen 3.3 versehen, der in der maximalen Einschubstellung des Arretierungselements an der Stirnseite 2.2 der Einstecköffnung der Steckbuchse 2 anschlägt und der von der genannten Stirnseite einen vorgegebenen Abstand W aufweist, wenn sich die Konusflächen K1 und K4 im Anschlag aneinander befinden. Der Abstand W garantiert eine einwandfreie Entriegelung des Steckerstiftes.

Auch der Steckerstift 1 ist mit einem als Einsschubbegrenzung dienenden Kragen oder einer entsprechenden stufenförmigen Erweiterung 1.4 seines Aussendurchmessers versehen, mit welchem bzw. mit welcher er in seiner maximalen Einschubstellung am genannten Kragen 3.3 des Arretierungselements 3 anschlägt.

Eine Einschubbegrenzung für den Steckerstift kann auch dadurch erreicht werden, dass sich dieser von seiner Spitze aus gesehen jenseits des Längsabschnitts L1 mit dem Aussendurchmesser A3 stufenförmig wieder erweitert (Stufe S1), z.B. auf den Durchmesser A2 und dass auch der Übergang zwischen dem Innendurchmesser I4 zum Innendurchmesser I5 am Arretierungselement stufenförmig ausgeführt ist (Stufe S2) Dies ist in Fig. 4 dargestellt.

Die erfindungsgemässe Steckverbindung ist vorzgsweise als elektrische Steckverbindung ausgebildet. Eine Steckverbindung in einer solchen Ausbildung zeigt Fig. 5.

Bei dieser Steckverbindung ist die Steckbuchse 2 in einer grösseren Tiefe bezüglich ihres Durchmessers wieder verengt. In diesen verengten Bereich 2.3 greift die gegenüber der Darstellung nach den Figuren 1 und 2 verlängerte Spitze des Steckerstiftes 1 in der maximalen Einschubstellung hinein. Die genannte Spitze ist zur Erreichnung einer guten und sicheren Kontaktgabe mit der Steckbuchse mit elastisch federnden Kontaktlamellen 1.5 versehen.

Fig. 4 a zeigt die elektrische Steckverbindung im noch nicht zusammengesteckten Zustand. Das Arretierungselement 3 ist allerdings bereits, quasi als intergraler Bestandteil der Steckbuchse 2, in diese eingesetzt. Es ist um den eingezeichneten Weg W frei axial innerhalb der Steckbuchse verschieblich. In Fig. 4 b ist der Steckerstift 1 gerade soweit in die Steckbuchse 2 eingeschoben, dass das verdickte vordere Ende 3.2 des Arretierungselements 3 an der vorderen Flanke K2 des verdickten Bereichs 1.2 des Steckerstiftes 1 anliegt und von diesem bereits etwas aufgeweitet ist. Der Kragen 3.3 des Arretierungselements 3 schlägt in dieser Stellung an der Stirnseite 2.2 der Steckbuchse 2 an. Beim weiteren Einschieben des Steckerstiftes 1 wird dann der verdickte Bereich 3.2 am vorderen Ende des Arretierungselements 3 unter weiterer elastischer Aufweitung über den verdickten Bereich 1.2 des Steckerstiftes 1 in die in Fig. 4 c dargestellte Stellung gleiten. In dieser Stellung ist der Steckerstift 1 gegen Herausgleiten aus der Steckbuchse 2 infolge einer Zugbelastung gesichert. Schliesslich zeigt Fig. 4 d, wie durch einen Druck auf das Arrtierungselement 3 in Richtung des eingezeichneten Pfeiles die Arretierung des Steckerstiftes 1 wieder lösbar ist. Das vordere verdickte Ende 3.2 des Arrtierungselements 3 gleitet hierbei unter elastischer Aufweitung über den verdickten Bereich 1.2 des Steckerstiftes 1.

Anhand des in Fig. 5 hinsichtlich der Grössenverhältnisse recht realistischen Ausführungsbeispiels ist zu erkennen, dass das Arretierungselement 3 im Verhältnis zum Steckerstift 1 bzw. zur Steckbuchse 2 realtiv klein ausführbar ist und sich organisch in die Steckbuchse 2 einfügt. Es ergibt sich insgesamt eine ausgesprochen einfache Konstruktion, welche sicher funktioniert und einhändig leicht bedienbar ist. Das erfindungsgemässe Konstruktionsprinzip kann auch bei sehr kleinen Steckerstiftdurchmessern Anwendung finden. Das Arretierungselement 3 kann bereits bei der Herstellung in die Steckbuchse eingesetzt werden. Auf Grund der einfachen Konstruktion kann dies in rationeller Weise von einem Automaten ausgeführt werden. Das Ersetzen eines Arretierungselements ist denkbar einfach und kann ohne Werkzeug ausgeführt werden.

## Patentansprüche

1. Steckverbindung mit einer Steckbuchse (2), einem Arretierungselement (3) und einem Steckerstift (1),
- wobei das Arretierungselement mit einem Ende (3.1) koaxial in die Steckbuchse einführbar und der Steckerstift durch das Arretierungselement koaxial durchsteckbar ist,
- wobei sich die Steckbuchse von ihrer Einstecköffnung (2.1) aus gesehen in ihrem Innern von einem Innendurchmesser I1 konisch auf einen Innendurchmesser I2 erweitert,
- wobei sich der Steckerstift von seiner Spitze (1.1) aus gesehen von einem Aussendurchmesser A1 konisch auf einen Aussendurchmesser A2 erweitert und sich anschliessend konisch wieder auf einen geringeren Aussendurchmesser A3 verjüngt und diesen Aussendurchmesser A3 mindestens über einen Längsabschnitt (1.3) mit der Länge L1 aufweist,
- wobei sich das Arretierungselement von seinem genannten Ende aus gesehen von einem Aussendurchmesser A4 auf einen Aussendurchmesser A5 konisch verjüngt und sich von einem Innendurchmesser I3 konisch auf einen Innendurchmesser I4 verjüngt, diesen Innendurchmesser über einen Längsabschnitt mit einer Länge L2 aufweist und sich anschliessend wieder auf einen Innendurchmesser I5 erweitert,
- wobei das Arretierungselement aus einem elastischen Material besteht und von seinem genannten Ende ausgehende Längsschlitze (3.4) aufweist, welche sich bis in den Bereich mit dem Aussendurchmesser A5 erstrecken, und
- wobei I1 kleiner als A4, A4 kleiner als I2, A3 kleiner als I4, I4 kleiner als A2 und L2 kleiner als L1 ist,
dadurch gekennzeichnet,
dass (I1 - A3) kleiner als (A4 - I4) und (A4 - I4) kleiner als (I2 - A2) ist.

2. Steckverbindung nach Anspruch 1, dadurch gekennzeichnet, dass der Konuswinkel zwischen den Innendurchmessern I1 und I2 der Steckbuchse dem Konuswinkel zwischen den Aussendurchmessern A4 und A5 des Arretierungselements entspricht

3. Steckverbindung nach Anspruch 1 oder 2, dadurch gekennzeichnet, dass der Konuswinkel zwischen den Innendurchmessern I4 und I5 des Arretierungselements dem Konuswinkel zwischen den Aussendurchmessern A1 und A2 des Steckerstiftes entspricht.

4. Steckverbindung nach einem der Ansprüche 1 bis 3, dadurch gekennzeichnet, dass der Konuswinkel zwischen den Innendurchmessern I3 und I4 des Arreitierungselements dem Konuswinkel zwischen den Aussendurchmessern A2 und A3 des Steckerstiftes entspricht.

5. Steckverbindung nach einem der Ansprüche 1 bis 4, dadurch gekennzeichnet, dass sich der Längsbereich in dem das Arretierungselement den Aussendurchmesser A4 aufweist mit dem Längsbereich überschneidet, in dem das Arretierungselement den Innendurchmesser I4 aufweist und dass die genannten Längsbereiche nahe am genannten Ende des Arretierungselements angeordnet sind.

6. Steckverbindung nach einem der Ansprüche 1 bis 5, dadurch gekennzeichnet, dass das andere Ende des Arretierungselements mit einem als Einsschubbegrenzung dienenden Kragen (3.3) versehen ist, welcher in der maximalen Einschubstellung des Arretierungselements an der Stirnseite (2.2) der Einstecköffnung (2,1) der Steckbuchse anschlägt und welcher von der genannten Stirnseite einen vorgegebenen Abstand (W) aufweist, wenn sich die konisch ausgebildeten Übergänge zwischen den beiden Innendurchmessern I1 und I2 einerseits und den beiden Aussendurchmessern A4 und A5 andererseits im Anschlag aneinander befinden.

7. Steckverbindung nach Anspruch 6, dadurch gekennzeichnet, dass der Steckerstift ebenfalls mit einem, als Einschubbegrenzung dienenden Kragen oder einer entsprechenden stufenförmigen Erweiterung (1.4) seines Aussendurchmessers versehen ist mit welchem bzw. mit welcher er in seiner maximalen Einschubstellung am genannten Kragen des Arretierungselements anschlägt und dass sich in der genannten maximalen Einschubstellung die Längsabschnitte L1 und L2 in gleicher Einschubtiefe in der Steckbuchse befinden.

8. Steckverbindung nach einem der Ansprüche 1 bis 6, dadurch gekennzeichnet, dass der Steckerstift sich von seiner Spitze aus gesehen jenseits des Längsabschnitts L1 mit dem Aussendurchmesser A3 stufenförmig wieder auf den Durchmesser A2 erweitert und dass auch der Übergang zwischen dem Innendurchmesser I4 zum Innendurchmesser I5 am Arretierungselement stufenförmig ausgeführt ist.

9. Steckverbindung nach einem der Ansprüche 1 bis 8, dadurch gekennzeichnet dass sie als elektrische Steckverbindung ausgebildet ist.

10. Steckverbindung nach Anspruch 9, dadurch gekennzeichnet, dass die Steckbuchse in einer grösseren Tiefe bezüglich ihres Durchmessers wieder verengt, dass die Spitze des Steckerstiftes in der maximalen Einschubstellung des Steckerstiftes in diesen verengten Bereich hineinragt und vorzugsweise mit elastisch federnden Kontaktlamellen (1.5) versehen ist.

## Claims

1. Pluggable connection with a socket (2), a locking element (3) and a plug pin (1), the locking element being insertable by one end (3.1) in coaxial manner into the socket and the plug pin being coaxially pluggable by the locking element, the socket, considered from its insertion opening (2.1), is widened in its interior in conical manner from an internal diameter I1 to an internal diameter I2, the plug pin, considered from its tip (1.1), widening from an external diameter A1 in conical manner to an external diameter A2 and subsequently conically tapers again to a smaller external diameter A3, which has the length L1 over at least one longitudinal portion (1.3), in which the locking element, considered from said end, conically tapers from an external diameter A4 to an external diameter A5 and conically tapers from an internal diameter I3 to an internal diameter I4, which has a length L2 over one longitudinal portion and subsequently widens again to an internal diameter I5, the locking element being made from an elastic material and from its said end emanate longitudinal slots (3.4) extending into the area with the external diameter A5, I1 being smaller than A4, A4 smaller than I2, A3 smaller than I4, I4 smaller than A2 and A2 smaller than L1, characterized in that (I1 - A3) is smaller than (A4 - I4) and (A4 - I4) is smaller than (I2 - A2).

2. Pluggable connection according to claim 1, characterized in that the cone angle between the internal diameters I1 and I2 of the socket corresponds to the cone angle between the external diameters A4 and A5 of the locking element.

3. Pluggable connection according to claims 1 or 2, characterized in that the cone angle between the internal diameters I4 and I5 of the locking element corresponds to the cone angle between the external diameters A1 and A2 of the plug pin.

4. Pluggable connection according to one of the claims 1 to 3, characterized in that the cone angle between the internal diameters I3 and I4 of the locking element corresponds to the cone angle between the external diameters A2 and A3 of the plug pin.

5. Pluggable connection according to one of the claims 1 to 4, characterized in that the length area in which the locking element has the external diameter A4 overlaps with the length area in which the locking element has the internal diameter I4 and that said length areas are located close to said end of the locking element.

6. Pluggable connection according to one of the claims 1 to 5, characterized in that the other end of the locking element is provided with a collar (3.3) serving as an insertion limiting means and which in the maximum insertion position of the locking element strikes against the front face (2.2) of the insertion opening (2.1) of the socket and which has from said front face a predetermined spacing (W), if the conically constructed transitions between the two internal diameters I1 and I2 and the two external diameters A4 and A5 are in engagement with one another.

7. Pluggable connection according to claim 6, characterized in that the plug pin is also provided with a collar used for insertion limiting purposes or a corresponding step-like widening (1.4) of its external diameter with which in its maximum insertion position it strikes against the collar of the locking element and in that in said maximum insertion position the length portions L1 and L2 are located in the same insertion depth in the socket.

8. Pluggable connection according to one of the claims 1 to 6, characterized in that the plug pin, considered from its tip, widens in step-like manner again to the diameter A2 on the other side of the length portion L1 with the external diameter A3 and that also the transition between the internal diameter I4 and the internal diameter I5 on the locking element is in step-like manner.

9. Pluggable connection according to one of the claims 1 to 8, characterized in that it is constructed as an electrical pluggable connection.

10. Pluggable connection according to claim 9, characterized in that the socket undergoes a diameter reduction again at a greater depth, that the tip of the plug pin in the maximum insertion position thereof projects into said narrowed area and is preferably provided with elastically resilient contact laminations (1.5).

## Revendications

1. Connecteur à emmanchement comprenant un élément femelle ou douille (2), un élément d'arrêt (3) et une fiche mâle (1),
- l'élément d'arrêt pouvant être engagé coaxialement dans la douille par une extrémité (3.1) et l'élément mâle pouvant être emmanché coaxialement à travers l'élément d'arrêt,
- la douille s'élargissant en cône dans son volume intérieur, à partir de son ouverture d'emmanchement (2.1), d'un diamètre intérieur I1 à un diamètre intérieur 12,
- la fiche mâle s'élargissant en cône, à partir de sa pointe (1.1), d'un diamètre extérieur A1 à un diamètre extérieur A.2, se rétrécissant ensuite en cône pour revenir à un diamètre extérieur A3 plus petit et présentant ce diamètre extérieur A3 au moins sur un segment longitudinal (1.3) de longueur L1,
- l'élément d'arrêt se rétrécissant en cône, à partir de son extrémité précitée, d'un diamètre extérieur A4 à un diamètre extérieur A5 et d'un diamètre extérieur I3 à un diamètre intérieur I4 et présentant ce diamètre intérieur sur un segment longitudinal de longueur L2 et, ensuite, s'élargissant de nouveau à un diamètre intérieur I5,
- l'élément d'arrêt étant composé d'une matière élastique et présentant des fentes longitudinales (3.4) partant de son extrémité précitée, qui s'étendent jusque dans la région de diamètre extérieur A5, avec
- I1 plus petit que A4, A4 plus petit que I2, A3 plus petit que I4, I4 plus petit que A2 et L2 plus petit que L1, caractérisé en ce que (I1 - A3) est plus petit que (A4 - I4) et (A4 - I4) est plus petit que (I2 - A2).

2. Connecteur à emmanchement selon la revendication 1, caractérisé en ce que l'angle de cône entre les diamètres intérieurs I1 et I2 de la douille correspond à l'angle de cône entre les diamètres extérieurs A4 et A5 de l'élément d'arrêt.

3. Connecteur à emmanchement selon la revendication 1 ou 2, caractérisé en ce que l'angle de cône entre les diamètres intérieurs I4 et I5 de l'élément d'arrêt correspond à l'angle de cône entre les diamètres extérieurs A1 et A2 de la fiche mâle.

4. Connecteur à emmanchement selon l'une des revendications 1 à 3, caractérisé en ce que l'angle de cône entre les diamètres intérieurs I3 et I4 de l'élément d'arrêt correspond à l'angle de cône entre les diamètres extérieurs A2 et A3 de la fiche mâle.

5. Connecteur à emmanchement selon l'une des revendications 1 à 4, caractérisé en ce que la région longitudinale dans laquelle l'élément d'arrêt présente le diamètre extérieur A4 se recoupe avec la région longitudinale dans laquelle l'élément d'arrêt présente le diamètre intérieur I4, et en ce que lesdites régions longitudinales sont disposées à proximité de ladite extrémité de l'élément d'arrêt.

6. Connecteur à emmanchement selon l'une des revendications 1 à 5, caractérisé en ce que l'autre extrémité de l'élément d'arrêt est munie d'une collerette (3.3) servant de limite d'enfoncement et qui, dans la position d'enfoncement maximal de l'élément d'arrêt, bute contre la face frontale (2.2) de l'ouverture d'engagement (2.1) de la douille, et qui se trouve à une distance (W) prédéterminée de ladite face frontale lorsque les transitions coniques entre les deux diamètres intérieurs I1 et I2, d'une part, et entre les deux diamètres extérieurs A4 et A5, d'autre part, se trouvent en butée l'une contre l'autre.

7. Connecteur à emmanchement selon la revendication 6, caractérisé en ce que la fiche mâle est munie elle aussi d'une collerette servant de limite d'enfoncement ou d'un élargissement correspondant (1.4) en forme d'échelon, par laquelle ou lequel il bute contre ladite collerette de l'élément d'arrêt dans sa position d'enfoncement maximal, et en ce que, dans ladite position d'enfoncement maximal, les segments longitudinaux L1 et L2 se trouvent à la même profondeur d'enfoncement dans la douille.

8. Connecteur à emmanchement selon l'une des revendications 1 à 6, caractérisé en ce qu'au-delà du segment longitudinal L1 de diamètre extérieur A3, considéré à partir de sa pointe, la fiche mâle s'élargit par un échelon, pour revenir au diamètre A2, et en ce que la transition entre le diamètre intérieur I4 et le diamètre intérieur I5 de l'élément d'arrêt est également réalisée en forme d'échelon.

9. Connecteur à emmanchement selon l'une des revendications 1 à 8, caractérisé en ce qu'il est constitué par un connecteur électrique à emmanchement.

10. Connecteur à emmanchement selon la revendication 9, caractérisé en ce qu'à une plus grande profondeur, la douille se rétrécit de nouveau en diamètre, et en ce que la pointe de la fiche mâle est engagée dans cette région rétrécie dans la position d'enfoncement maximal de la fiche mâle et est munie de préférence de lamelles de contact élastiques (1.5).
